Europäisches Patentamt

European Patent Office

Office européen des brevets

(11) Publication number: **0 247 861 B1**

# EUROPEAN PATENT SPECIFICATION

(45) Date of publication of patent specification: **12.08.92**

(21) Application number: **87304706.2**

(22) Date of filing: **27.05.87**

(51) Int. Cl.5: **C08F 255/00**, C08F 257/02,
//(C08F255/00,220:22),
(C08F257/02,220:22)

(54) Flame retardant polymer compositions.

(30) Priority: **27.05.86 IL 78935**

(43) Date of publication of application:
**02.12.87 Bulletin 87/49**

(45) Publication of the grant of the patent:
**12.08.92 Bulletin 92/33**

(84) Designated Contracting States:
**BE DE ES FR GB IT NL**

(56) References cited:
**FR-A- 2 369 302**

**CHEMICAL ABSTRACTS, vol. 84, 1976, page
46, no. 18320y, Columbus, Ohio, US; & JP-
A-75 100 185 (TOA GOSEI CHEMICAL INDUS-
TRY CO., LTD) 08-08-1975**

(73) Proprietor: **Bromine Compounds Ltd.
Makleff House P.O.B. 180
Beer-Sheva 84101(IL)**

(72) Inventor: **Teuerstein, Avraham
54 Hadar St.
Omer(IL)**
Inventor: **Rumack, Michael
Shabazi St.
Karkur 37000(IL)**
Inventor: **Bronfman, Gregory
Radak Sq. 14/13
Beer-Sheva(IL)**

(74) Representative: **Clifford, Frederick Alan et al
MARKS & CLERK 57/60 Lincoln's Inn Fields
London WC2A 3LS(GB)**

## Description

The present invention relates to flame retardant polymer compositions. More particularly the invention relates to polymer compositions comprising non-linear structural configurations which contain tri-and pentabromophenoxy ethyl esters of acrylic and methacrylic acids.

It is known that generally, normally flammable polymers can be rendered flame-retardant by the incorporation of halogenated organic compounds. It is also recognized that not all halogenated organic compounds are necessarily useful as flame retardants in all the polymeric compositions which require flame retardation. Consequently, the effectiveness of halogen-containing organic materials intended for use as fire retardants is unpredictable. Some materials release their halogen either too early or too late in the combustion process to provide the degree of fire protection required.

Some of the halogenated compounds which have been proposed for use as flame retardants, have one or more of the following disadvantages: volatility, instability due to decomposition and/or discoloration at processing temperatures, inadequate efficiency, incompatibility and UV instability.

Some of the disadvantages make a compound less desirable for use as flame retardant and others actually prevent it from having any practical utility for such applications. The general lack of success of the prior art in producing a wide spectrum flame retardant reagent, or an optimal material for even a more limited range of applicability, is at least partially due to the tendency of the flame retardant to degrade at least one of the properties of the blend produced while improving another. For instance, it has been found that compounds containing cycloaliphatic bromine are sometimes more efficient than other halogenated compounds, but these compounds have poor stability at the processing temperatures of some polymers and frequently have other disadvantages, such as volatility, toxicity and incompatibility. It is clearly advantageous that a single flame retardant additive find use in a large number of applications.

Copolymers derived from structural units based on pentabromobenzyl and tetrabromobenzyl esters monomers, polymerized with one or more units derived from comonomers consisting of acrylic and/or methacrylic, maleic or fumaric acid, are suggested in the U.K. Patent No. 1,544,022 as flame-proofing agents for a series of plastics selected from polyesters, polycarbonate, polyacetals and polyurethanes. As mentioned therein, the polymers obtained have the particular advantage of a very low tendency towards migration, possessing high resistance to elevated temperatures.

It is well known that halogen-containing compounds generally behave differently when the incorporation is in such a manner that the halogen atom is incorporated in units of the polymeric backbone or in a pendant side chain. It is thought that pendant side chains are sometimes lost under stress conditions and with them the flame retardant properties. The general conclusion is that one cannot predict a priori that a halogen-containing component incorporated into a macromolecule will be efficient or not.

It has now been found that tri-and pentabromophenoxy ethyl esters of acrylic and methacrylic acids are amenable to the production of non-linear polymeric configurations, in which the said bromine-containing compounds are contained pendant side chains or crosslink, by their reaction with the preformed polymers, imparting to them flame retardant properties. Thus the invention consists of flame retardant polymer compositions comprising non-linear structural configurations which result from reacting tri-and pentabromophenoxy ethyl esters of acrylic and methacrylic acids with a preformed backbone polymer selected from the group consisting of polyolefins, rubbers, polymeric dienes and mixtures or copolymers thereof.

The flame retardant reagents according to the present invention were found to impart outstanding flame retardant properties to ethylene-propylene rubber, when a V-O rating (on UL - 94) was obtained on a 2 mm specimen with a composition containing 18% bromine. Furthermore, the specimen possessed a smooth and glossy surface which was completely absent of any blooming effect. It is well-known that blooming is considered a serious drawback in many applications, and is a result of the poor compability of the flame retardant with the polymer.

The flame retardant reagents useful for the present invention are:

(1) Acrylic acid-2-[2,4,6-tribromophenoxy] ethyl ester;

(2) Methacrylic acid-2-[2,4,6-tribromophenoxy] ethyl ester;

(3) Acrylic acid-2-[pentabromophenoxy] ethyl ester; and

(4) Methacrylic acid-2-[pentabromophenoxy] ethyl ester.

In principle, one may conceive to utilize other brominated or chlorinated derivatives or chlorine-bromine derivatives, but their flame retardancy effectiveness seems to be less than that of the above brominated compounds.

The above brominated compounds were synthesized and appear in the form of white crystalline material, some of their properties are summarized in the following Table 1.

## TABLE 1.

### Some properties of tri- and pentabromophenoxy ethyl esters of acrylic and methacrylic acids.

| Structure of the compound | Name of the compound | Molecular weight | % Bromine calculated | found | Melting point |
|---|---|---|---|---|---|
| $Br_3$-⟨⟩-OCH$_2$CH$_2$OCCH=CH$_2$ (O) | acrylic acid-2-(2,4,6-tribromophenoxy)ethyl ester | 429 | 55.94 | 56.0 | 53-4 |
| $Br_3$-⟨⟩-OCH$_2$CH$_2$OCC(CH$_3$)=CH$_2$ | methacrylic acid-2-(2,4,6-tribromophenoxy) ethyl ester | 443 | 54.17 | 54.2 | 90-1 |
| $Br_5$-⟨⟩-OCH$_2$CH$_2$OCCH=CH$_2$ (O) | acrylic acid-2-(pentabromophenoxy)ethyl ester | 587 | 68.10 | 67.9 | 114-6 |
| $Br_5$-⟨⟩-OCH$_2$CH$_2$OCC(CH$_3$)CH$_2$ | methacrylic acid-2-(pentabromophenoxy) ethyl ester | 601 | 66.33 | 66.3 | 122-4 |

The compounds are prepared as known in the art by reacting acrylic acid, or methacrylic acid with tribromophenyl-2-bromoethyl ether or with pentabromophenyl-2-bromoethyl ether.

The flame retardant reagents according to the present invention are characterized by their thermostability at high temperatures, as determined by the thermal gravimetric analyses. The results of the thermal gravimetric analyses of acrylic acid and methacrylic acid-2-pentabromophenoxy ethyl esters are given in the following Table 2.

## TABLE 2.

### Thermal gravimetric analyses of pentabromophenoxy ethyl esters of acrylic and methacrylic acids (measured at heating rate of 10 degrees per minute, under nitrogen atmosphere).

| The Compound | Temperature (degrees C) | Loss in weight ( % ) |
|---|---|---|
| Acrylic acid-2-pentabromo-phenoxy ethyl ester | 261 | 1 |
| | 279 | 2 |
| | 308 | 5 |
| | 328 | 10 |
| Methacrylic acid-2-penta-bromophenoxy ethyl ester | 265 | 1 |
| | 275 | 2 |
| | 295 | 5 |
| | 305 | 10 |

The non-linear polymeric compositions of this invention are obtained either by graft polymerization or cross-linking with the tri - and pentabromophenoxy ethyl esters of acrylic or methacrylic acids. The graft polymers have the above brominated esters bonded onto a preformed backbone. The crosslinked polymer will be obtained by the formation of chemical links containing the brominated ester between the preformed polymer chains. The extent of crosslinking with the acrylate or with the corresponding methacrylate ester was determined by the gel content and found to be above 96% (using a xylene solution) either with the acrylate or with the corresponding methacrylate ester. The nature of the final compositions will be determined by the relative proportions of the constituents - tri or pentabromophenoxy ethyl esters of acrylic or methacrylic acids and the respective preformed backbone polymer and the grafting/crosslinking technique employed. It should also be recognized that the preformed backbone polymers can be also in their substituted form. In order to optimize the best combination of good processing and performance properties, it is preferred to obtain products containing from 10% to 50% by weight of the acrylate or methacrylate ester and the balance is the synergist compound, stabilizer etc.

The compositions according to the present invention may be prepared by any of the conventional technique of free radical grafting or crosslinking processes used, e.g. mechanical, thermal radiation induced, or chemically induced and by any of the technologies commonly used such as bulk, solution, emulsion suspension polymerization or reactive melt processing.

Whereas the system according to the present invention involves a polymerisation, between a preformed polymer and the flame retardant reagent, one may conceive to incorporate crosslinking activators which will further enhance the efficiency of the crosslinking reaction.

It is usual to incorporate a crosslinking/grafting initiator, e.g. organic peroxide, which enhances the above reaction. In the case of crosslinking, a coagent multifunctional crosslinking, e.g. triallyl cyanurate may be used to improve efficiency and crosslinking density.

Although the flame retardant polymer compositions obtained according to the present invention are by themselves very efficient, one may further enhance their effectiveness by including one or more synergists conventionally used in flame retardation. These syngergistic compounds include oxides, sulfides or organic salts of antimony, boron, arsenic or zinc borate. The preferred synergistic compound for use in the compositions of this invention is antimony trioxide.

Preferably, the backbone polymer is at least 20% by weight of the total resin present in the composition.

It was found that the new non-linear compositions obtained by the reaction of preformed polymers with the flame retardant reagents according to the present invention, have improved important mechanical properties. For example it has been found that these flame retardant reagents produce crosslinked compositions with ethylene-propylene rubber, which compositions are superior to those obtained with other known flame retardants consisting of bromine-containing compounds such as brominated bisimides (so called BT-93).

Several experiments were done using the following preparation:

The flame retardants and $Sb_2O_3$ were dispersed in the ethylene-propylene rubber as masterbatches at a load of about 50% additive. This was done in the Brabender at 110 degrees C and the mass was pressed for 15 seconds at 125 degrees C to make cutting and weighing simple.

Masterbatches, elastomer and components (except dicumyl peroxide) were blended in the plasticorder at 125 degrees C for 20 minutes at 20-25 RPM. At higher speeds, the viscous dissipation caused uncontrolled increase in temperature. After 20 minutes, the peroxide was introduced and mixed into the polymer for 3 minutes. The molten mass was removed from the mixing cell, transferred to the press and cured into a plate 2 mm thick for 30-45 minutes at 130 degrees C.

In the following Table 3 are summarized the comparative results of some of the mechanical and flammability properties for such compositions based on 100 parts of constituents.

The reagents used in the experiments summarized in the Table 3 below were as follows:

- Ethylene-propylene diene monomer rubber, VISTALON 3708 (Trade Mark, produced by ESSO).
- Dicumyl peroxide, produced by Polysciences (used as polymerization initiator).
- Antimony oxide, Timonox White Star (Trade Mark, produced by Anzon).
- Trialyl cyanurate, produced by Polysciences (used as crosslinking promoter).
- Brominated bisimide BT-93 (Trade Mark, produced by Saytech).

The gel content, which indicated the extent of crosslinking was determined according to ASTM D-2765-68, using xylene.

The tensile strength measurements were determined according to ASTM D-638-68.

## TABLE 3.

### Mechanical and flammability properties of various compositions (100 parts) based on 66 parts of ethylene-propylene diene rubber.

### Flame retardant reagents used in the experiments.

| Formulations (The consti-tuent) | BT-93 | Acrylic acid tribromophen-oxy ethyl ester | Methacrylic acid tribromophenoxy ethyl ester | Methacrylic acid phentabromo-phenoxy ethyl ester |
|---|---|---|---|---|
| | | (in parts per hundred) | | |
| Flame retardant | 27.3 | 31 | 31.6 | 27.2 |
| Ant. oxide | 10.9 | 10.9 | 10.9 | 10.9 |
| Dic. peroxide | 3 | 3 | 3 | 3 |
| triallyl cyanurate | 1 | 1 | 1 | 1 |
| % Gel | n.d. | 96% | 97% | n.d. |
| % Bromine | 18 | 18 | 18 | 18 |

### Results on flammability and mechanical properties.

| | | | | |
|---|---|---|---|---|
| Ultimate Strength(MPa) | 4.14 | 7.13 | 15.22 | 12.89 |
| Elongation at break (%) | 277 | 551 | 468 | 540 |
| UL-94, 2 mm V rating | V-0 | V-0 | V-2 | V-0 |

(MPa = Megapascal; n.d. not determined).

As seen from Table 3, the flame retardant reagents used according to the present invention, result in a very high degree of crosslinking as shown by the gel content. The mechanical properties (ultimate strength, elongation at break) are much better than those obtained with BT-93 (brominated bisimide) which is a well known efficient flame retardant. The formulations using acrylic acid tribromophenoxy and methacrylic pentabromophenoxy ethyl esters were also tested for their flammability property according to UL-94 and found to be rated V-O.

Whereas the compositions according to the present invention are based on a reaction which involves crosslinking, various coagents for this type of reaction may be utilized as known in the art (see for example page 331 in the Encyclopedia of Polymer Science and Technology, Vol. 4, H.F. Mark, Interscience Publ. Co. N.Y. 1966). Among these coagents the following should be in parcticular mentioned: bis-azodicarboxylates, dialyl phtalate, triallyl cyanurate, triallyl isocyanurate, divinyl benzene, $S_2Cl_2$, dimaleimides, ethylene dimethacrylate, ethylene glycol dimethacrylate, 1,3 butylene glycol dimethacrylate etc.

The fire retardant compositions according to the present invention may further include, depending on the purposes, reinforcing agents such as glass fibers, carbon fibers and asbestos, fillers such as silica, alumina, silica-magnesia, calcium silicate, calcium carbonate, barium sulfate, lubricants such as higher fatty acid esters and paraffin waxes, as well as other stabilizers, antistatic agents, antioxidants, UV absorbers, dyes, pigments e.g. titanium dioxide or the like, as generally utilized for such compositions.

While the invention has been described in connection with certain preferred embodiments and compositions, it will be understood that it is not intended to limit the invention to those particular Examples. As already mentioned, the invention was illustrated using ethylene-propylene rubber, but it is also applicable to other polymers such as polyolefins. Also, modifications or other compositions or ingredients, beyond those given in the present specification, as may be included within the scope of the invention, should be considered to be covered by the present patent application. It should be understood that the particulars described are by way of example and for purposes of illustrative discussion of the present invention without being limited thereto.

## Claims

1. Flame retardant polymer compositions comprising non-linear structural configurations which result from reacting tri-and pentabromophenoxy ethyl esters of acrylic or methacrylic acids with a preformed backbone polymer selected from the group consisting of polyolefins, styrenics polymers and mixtures or copolymers thereof.

2. Flame retardant polymer compositions according to Claim 1, wherein said preformed backbone polymers are in their substituted form.

3. Flame retardant polymer composition according to Claims 1 or 2, wherein the non-linear structural configurations result from the grafting of the tri-and pentabromophenoxy ethyl esters of acrylic or methacrylic acids onto the preformed backbone polymer.

4. Flame retardant polymer compositions according to Claims 1 or 2, wherein the non-linear structural configurations result from the incorporation of tri-and pentabromophenoxy ethyl esters of acrylic or methacrylic acids as crosslinks between chains of the preformed backbone polymer.

5. Flame retardant polymer compositions according to Claims 1 to 4, wherein said compositions contain from 10% to 50% weight of tri-and pentabromophenoxy ethyl esters of acrylic or methacrylic acids and the balance of the preformed polyer compound.

6. Flame retardant polymer compositions according to Claims 1 to 5, wherein a crosslinklng coagent or promoter is incorporated in the compositions.

7. Flame retardant polymer compositions according to Claim 6, wherein said coagent is triallyl cyanurate.

8. Flame retardant polymer compositions according to Claims 1 to 7, wherein the backbone polymer is at least 20% by weight of the total resin present in the composition.

9. Flame retardant polymer compositions according to Claim 8, wherein said preformed backbone polymer is ethylene - propylene diene rubber.

10. Flame retardant polymer compositions according to Claim 8, wherein said preformed backbone polymer is ABS resin.

11. Flame retardant polymer compositions according to Claims 1 to 10, wherein at least one synergistic flame retardant additive is incorporated therein.

12. Flame retardant polymer compositions according to Claim 11, wherein said synergistic additive is antimony oxide.

13. A method for the preparation of flame retardant polymer compositions comprising non-linear structural configurations which result grafting of tri-and pentabromophenoxy ethyl esters of acrylic or methacrylic acids, onto a preformed backbone polymer selected from the group consisting of polyolefins, styrenic polymers and mixtures or copolymers thereof, using conventional techniques.

14. A method for the preparation of flame retardant polymer compositions comprising non-linear structural configurations which result by crosslinking the tri- and pentabromophenoxyethyl esters of acrylic or methacrylic acid with a preformed backbone polymer selected from the group consisting of polyolefins, styrenic polymers and mixtures or copolymers thereof, using conventional techniques.

15. A method for the preparation of flame retardant polymer compositions according to Claims 13 or 14, wherein the reaction is initiated by conventional free radicals producing means.

16. A method for the preparation of flame retardant polymer compositions according to Claims 13 to 15, wherein said preformed backbone polymer is ethylene-propylene diene.

17. A method for the preparation of flame retardant polymer compositions according to Claims 13 to 16, wherein conventional additives selected from pigments, fillers, fibres, lubricants, stabilizers and carbon black are incorporated.

18. Flame retardant polymer compositions comprising non-linear structural configurations substantially as described in the specificaiton and claimed in any of Claims 1 to 14.

**Revendications**

1. Compositions polymères ignifugées comprenant des configurations structurales non linéaires qui résultent de la réaction d'esters tri- et pentabromophénoxyéthyliques d'acide acrylique ou d'acide méthacrylique avec un polymère tronc préformé choisi dans le groupe constitué par les polyoléfines, les polymères styréniques et leurs mélanges ou copolymères.

2. Compositions polymères ignifugées selon la revendication 1, dans lesquelles lesdits polymères troncs préformés sont sous leurs formes substituées.

3. Composition polymère ignifugée selon les revendications 1 ou 2, ou les configurations structurales non linéaires résultant du greffage des esters tri- et pentabromophénoxyéthyliques d'acide acrylique ou d'acide méthacrylique sur le polymère tronc préformé.

4. Compositions polymères ignifugées selon les revendications 1 au 2, dans lesquelles les configurations structurales non linéaires résultent de l'incorporation d'esters tri- et pentabromophénoxyéthyliques d'acide acrylique ou d'acide méthacrylique, comme réticulations entre des chaînes du polymère tronc préforme.

5. Compositions polymères ignifugées selon les revendications 1 à 4, ou lesdites compositions contiennent de 10 % à 50 % en poids d'esters tri- et pentabromophénoxyéthyliques d'acide acrylique ou d'acide méthacrylique, le complément étant constitué du composé polymère préformé.

6. Compositions polymères ignifugées selon les revendications 1 à 5, dans lesquelles un coagent, ou promoteur de réticulation, est incorporé aux compositions.

7. Compositions polymères ignifugées selon la revendication 6, dans lesquelles ledit coagent est le cyanurate de triallyle.

8. Compositions polymères ignifugées selon les revendications 1 à 7, dans lesquelles le polymère tronc constitue au moins 20 % du poids des résines totales présentes dans la composition.

9. Compositions polymères ignifugées selon la revendication 8, dans lesquelles ledit polymère tronc préformé est un caoutchouc d'éthylène-propylène-diène.

10. Compostions polymères ignifugées selon la revendication 8, dans lesquelles ledit polymère tronc préformé est une résine ABS.

11. Compositions polymères ignifugées selon les revendications 1 à 10, dans lesquelles au moins un additif ignifugeant synergiste est incorpore.

12. Compositions polymères ignifugées selon la revendication 11, dans lesquelles ledit additif synergiste est l'oxyde d'antimoine.

13. Procédé pour la préparation du compositions polymères ignifugées comprenant des configurations structurales non linéaires qui résultant du greffage d'esters tri- et pentabromophénoxyéthyliques de l'acide acrylique ou de l'acide méthacrylique sur un polymère tronc préformé choisi dans la groupe constitué par les polyoléfines, les polymères styréniques et lours mélanges ou copolymères, selon des techniques classiques.

14. Procédé pour la préparation de compositions polymères ignifugées comprenant des configurations structurales non linéaires que résultent de la réticulation des esters tri- et pentabromophénoxyéthyliques de l'acide acrylique ou de l'acide méthacrylique avec un polymère tronc préformé choisi dans le groupe constitué par les polyoléfines, les polymères styréniques et leurs mélanges ou copolymères, selon des techniques classiques.

15. Procédé pour la préparation de compositions polymères ignifugées selon les revendications 13 ou 14, dans lequel la réaction est amorcée par un moyen classique produisant des radicaux libres.

16. Procédé pour la préparation de compositions polymères ignifugées selon les revendications 13 à 15, dans lequel ledit polymère tronc préformé est un polymère d'éthylène-propylène-diène.

17. Procédé pour la préparation de compositions polymères ignifugées selon les revendications 13 à 16, dans lequel des additifs classiques, choisis parmi les pigments, les charges, les fibres, les lubrifiants, les stabilisants et le noir de carbone, sont incorporée.

18. Compositions polymères ignifugées comprenant des configurations structurales non linéaires sensiblement comme décrit dans la description et revendiquées dans l'une quelconque des revendications 1 à 14.

**Patentansprüche**

1. Flammhemmende Polymerzusammensetzungen enthaltend nicht-lineare strukturelle Konfigurationen als Resultat der Umsetzung von Tri- und Pentabromphenoxyethylestern von Acryloder Methacrylsäuren mit einem vorgebildeten Hauptkettenpolymer der Gruppe aus Polyolefinen, Styrolpolymeren und Mischungen oder Copolymeren derselben.

2. Flammhemmende Polymerzusammensetzungen gemäß Anspruch 1, in welchen die vorgebildeten Hauptkettenpolymeren in ihrer substituierten Form vorliegen.

3. Flammemmende Polymerzusammensetzung gemäß Ansprüchen 1 oder 2, in welcher die nicht-linearen strukturellen Konfigurationen aus dem Pfropfen der Tri- und Pentabromphenoxyethylester von Acryl- oder Methacrylsäuren auf das vorgebildete Hauptkettenpolymer resultieren.

4. Flammhemmende Polymerzusammensetzungen gemäß Ansprüchen 1 oder 2, in welchen die nicht-linearen strukturellen Konfigurationen aus der Inkorporierung von Tri- und Pentabromphenoxyethylestern von Acryl- oder Methacrylsäuren als Vernetzungen zwischen Ketten des vorgebildeten Hauptkettenpolymers resultieren.

5. Flammhemmende Polymerzusammensetzungen gemäß Ansprüchen 1 bis 4, wobei diese Zusammensetzungen 10 bis 50 Gew.-% Tri-und Pentabromphenoxyethylester von Acryl- oder Methacrylsäuren enthalten und den Rest der vorgebildeten Polymerverbindung oder als Rest die vorgebildete Polymerverbindung.

6. Flammhemmende Polymerzusammensetzungen gemäß Ansprüchen 1 bis 5, wobei ein vernetzendes Koagens oder Promotor in die Zusammensetzungen inkorporiert ist.

**7.** Flammhemmende Polymerzusammensetzungen gamäß Anspruch 6, wobei das Koagens Triallylcyanurat ist.

**8.** Flammhemmende Polymerzusammensetzungen gemäß Ansprüchen 1 bis 7, wobei das Hauptkettenpolymer mindestens 20 Gew.-% des in der Zusammensetzung anwesenden gesamten Harzes ausmacht.

**9.** Flahmhemmende Polymerzusammensetzungen gemäß Anspruch 8, in welchen das vorgebildete Hauptkettenpolymer Ethylenpropylendien-Kautschuk ist.

**10.** Flammhemmende Polymerzusammensetzungen gemäß Anspruch 8, in welchen das vorgebildete Hauptkettenpolymer ABS Harz ist.

**11.** Flammhemmende Polymerzusammensetzungen gemäß Ansprüchen 1 bis 10, in welchen mindestens ein synergistisches flammhemmendes Additiv inkorporiert ist.

**12.** Flammhemmende Polymerzusammensetzungen gemäß Anspruch 11, in welchen das synergistische Additiv Antimonoxid ist.

**13.** Verfahren zum Herstellen flammhemmender Polymerzusammensetzungen enthaltend nicht-lineare strukturelle Konfigurationen, die sich beim Pfropfen von Tri- und Pentabromphenoxy-ethylestern von Acryl- oder Methacrylsäuren auf ein vorgebildetes Hauptkettenpolymer der Gruppe aus Polyolefinen, Styrolpolymeren und Mischungen oder Copolymeren derselben unter Anwendung bekannter Techniken ergeben.

**14.** Verfahren zum Herstellen flammhemmender Polymerzusammensetzungen enthaltend nicht-lineare strukturelle Konfigurationen, die sich durch Vernetzen der Tri- und Pentabromphenoxyethylester von Acryl- oder Methacrylsäure mit einem vorgebildeten Hauptkettenpolymer der Gruppe aus Polyolefinen, Styrolpolymeren und Mischungen oder Copolymeren derselben unter Anwendung bekannter Techniken ergeben.

**15.** Verfahren zum Herstellen von flammhemmenden Polymerzusammensetzungen gemäß Ansprüchen 13 oder 14, wobei die Reaktion durch übliche freie Radikale erzeugende Maßnahmen initiiert wird.

**16.** Verfahren zum Herstellen von flammhemmenden Polymerzusammensetzungen gemäß Ansprüchen 13 bis 15, wobei das vorgebildete Hauptkettenpolymer Ethylenpropylendien ist.

**17.** Verfahren zum Herstellen von flammhemmenden Polymerzusammensetzungen gemäß Ansprüchen 13 bis 16, wobei übliche Additive ausgewählt aus Pigmenten, Füllstoffen, Fasern, Schmiermitteln, Stabilisatoren und Kohlenstoffruß inkorporiert werden.

**18.** Flammhemmende Polymerzusammensetzungen enthaltend nicht-lineare strukturelle Konfigurationen im wesentlichen wie in der Beschreibung beschrieben und in einem der Ansprüche 1 bis 14 beansprucht.